Europäisches Patentamt

European Patent Office

Office européen des brevets

(19)

(11) **EP 0 645 947 B1**

(12) **FASCICULE DE BREVET EUROPEEN**

(45) Date de publication et mention
de la délivrance du brevet:
**15.01.1997 Bulletin 1997/03**

(51) Int Cl.⁶: **H05H 3/06**, H01J 27/04

(21) Numéro de dépôt: **94202724.4**

(22) Date de dépôt: **22.09.1994**

(54) **Tube neutronique à confinement magnétique des électrons par aimants permanents et son procédé de fabrication**

Neutronenröhre mit magnetischem Elektroneneinschluss durch Dauermagneten und dessen Herstellungsverfahren

Neutron tube providing electron magnetic confinement by means of permanent magnets, and manufacturing method thereof

(84) Etats contractants désignés:
**DE FR GB**

(30) Priorité: **29.09.1993 FR 9311608**

(43) Date de publication de la demande:
**29.03.1995 Bulletin 1995/13**

(73) Titulaires:
- **SOCIETE ANONYME D'ETUDES ET REALISATIONS NUCLEAIRES - SODERN 94450 Limeil Brevannes (FR)**
  Etats contractants désignés:
  **FR**
- **PHILIPS ELECTRONICS N.V. 5621 BA Eindhoven (NL)**
  Etats contractants désignés:
  **DE GB**

(72) Inventeur: **Verschoore, Gérard**
**F-75008 Paris (FR)**

(74) Mandataire: **Pyronnet, Jacques**
**Société Civile S.P.I.D.**
**156, Boulevard Haussmann**
**75008 Paris (FR)**

(56) Documents cités:
EP-A- 0 362 947          EP-A- 0 473 233
NL-A- 7 707 357          US-A- 3 408 526

## Description

La présente invention concerne un tube neutronique scellé contenant un mélange gazeux deutérium-tritium ou deutérieum-deutérium sous faible pression et comportant une source d'ions, une électrode d'extraction-accélération et une électrode cible, la source d'ions étant constituée de 2n cellules d'émission élémentaires de type Penning, ces cellules ayant des anodes disposées dans une cavité cathodique unique munie d'un orifice d'extraction par cellule selon l'axe de cette dernière, et chaque cellule comportant un système d'aimantation permanente, les ions, formés par bombardement d'électrons sur ledit mélange gazeux, dans la source d'ions, étant canalisés par un champ magnétique de confinement créé par lesdits systèmes d'aimantation, extraits à travers les orifices d'extraction percés dans la cathode et accélérés par ladite électrode d'extraction-accélération, et projetés sur ladite électrode cible pour y produire une réaction de fusion entraînant une émission de neutrons.

L'invention concerne aussi un (des) procédé(s) de fabrication d'un tel tube.

Les tubes neutroniques de ce genre sont utilisés dans les techniques d' examen de la matière par neutrons rapides, thermiques, épithermiques ou froids : neutronographie, analyse par activation, analyse par spectrométrie des diffusions inélastiques ou des captures radiatives, diffusion des neutrons, etc...

L'obtention de la pleine efficacité de ces techniques nucléaires nécessite d'avoir, pour les niveaux d'émission correspondants, des durées de vie de tubes plus longues, ce qui constitue, pour la présente invention, l'un des problèmes techniques à résoudre.

La réaction de fusion T(d,n)$^4$He délivrant des neutrons de 14 MeV est habituellement la plus utilisée en raison de sa grande section efficace pour des énergies d'ions relativement faibles (tubes deutérieum-tritium ou D-T). Toutefois, quelle que soit la réaction utilisée, le nombre de neutrons obtenu par unité de charge transitant dans le faisceau, est toujours croissant au fur et à mesure que l'énergie des ions dirigés vers une cible épaisse est elle-même croissante et ceci largement au-delà des énergies des ions obtenus dans les tubes scellés actuellement disponibles et alimentés par une THT n'excédant pas 250 kV.

Parmi les principaux facteurs limitatifs de la durée de vie d'un tube neutronique, la dégradation de la cible est prépondérante, sous l'effet d'une part, de l'érosion de la cible par le bombardement ionique, et d'autre part, de l'éclatement local de la cible sous l'effet de l'accumulation des gaz implantés qui ne diffusent pas, particulièrement pour les tubes à fort niveau d'émission.

L'érosion est fonction de la nature du matériau, et de la structure de la cible d'une part, de l'énergie des ions incidents et de leur profil de répartition en densité sur la surface d'impact d'autre part.

Dans la plupart des cas, la cible est constituée par un matériau hydrurable (titane, scandium, zirconium, erbium, etc...) capable de fixer et de relâcher des quantités importantes d'hydrogène sans perturbation notable de sa tenue mécanique : la quantité totale fixée est fonction de la température de la cible et de la pression d'hydrogène dans le tube. Les matériaux cibles utilisés sont déposés sous forme de couches minces dont l'épaisseur est limitée par des problèmes d'adhérence de la couche sur son support. Un moyen de retarder l'érosion de la cible consiste par exemple à former la couche active absorbante d'un empilage de couches identiques isolées les unes des autres par une barrière de diffusion. L'épaisseur de chacune des couches actives est de l'ordre de la profondeur de pénétration des ions deutérium venant frapper la cible. Cette technique est connue de la demande de brevet européen EP-A-0 338 619 au nom de la demanderesse.

Une autre façon connue de protéger la cible et donc d'accroître la durée de vie du tube, compatible avec celle indiquée au paragraphe précédent, consiste à agir sur le faisceau d'ions de manière à améliorer son profil de répartition en densité sur la surface d'impact : à courant d'ions total constant sur la cible, ce qui entraîne une émission neutronique constante, cette amélioration résultera d'une répartition aussi uniforme que possible de la densité de courant sur l'ensemble de la surface offerte par la cible au bombardement des ions.

Dans un tube neutronique scellé, les ions sont en général fournis par une source d'ions de type Penning qui a l'avantage d'être robuste, d'être à cathode froide (d'où une longue durée d'utilisation), de donner des courants de décharge importants pour de faibles pressions (de l'ordre de 10 A/torr 75.10$^{-3}$ Pa), d'avoir un rendement élevé et d'être de faibles dimensions.

Les inconvénients précités militent en faveur d'une source de type multicellulaire, c'est-à-dire constituée d'une structure de cellules élémentaires de type Penning comportant, pour l'ensemble des cellules, une cavité cathodique commune comme décrit par exemple dans la demande de brevet européen publiée sous le numéro EP-A-0 362 947 au nom de la demanderesse. On notera que le fonctionnement du tube s'effectue à une valeur de courant moyen constant, $I_{cm}$, cette valeur étant liée à une dissipation d'énergie maximale admissible pour le tube. Une source multicellulaire fonctionnant à des pressions de l'ordre de 133.10$^{-4}$ Pa (10$^{-4}$ torr), conserve au tube l'avantage d'une plus grande durée de vie par usure plus uniforme de la cible mais d'autres problèmes se posent, en fonctionnement par impulsions notamment, pour lequel sont définis une fréquence de répétition F associée à la période T (T = 1/F), un rapport cyclique ou taux de travail $T_t$, et un retard à l'amorçage $\tau$. L'existence de ce retard $\tau$ est un effet parasite du tube, fonctionnant en régulation de pression, que l'on s'efforce de minimiser. Pour les valeurs de pression les plus fortes, le courant crête augmente et le taux de travail $T_t$ diminue en proportion exactement inverse, au point qu'une valeur maximale $F_{max}$ est atteinte lors-

qu'on diminue la pression, due à l'existence d'une valeur de $\tau$ associée, ce qui peut être gênant parce qu'il n'est alors pas possible d'atteindre certains types de fonctionnement en impulsions (taux de travail et fréquence élevés) et aussi parce que l'effet de vacillement dû aux variations aléatoires de $\tau$ est maximal. Un deuxième problème apparaît de façon concomitante pour certaines conditions de fonctionnement, qui est la difficulté d'obtenir une boucle stable de régulation de la pression. Ceci provient du fait que la pression est une fonction à la puissance 17 du courant de régulation $I_r$ du réservoir d'hydrogène incorporé au tube, et qu'il est, dans ces conditions, difficile d'engendrer un pas de variation de $I_r$ suffisamment petit, compte tenu de la plage à couvrir dans un système commandé par calculateur. L'invention permet de réduire cet inconvénient en offrant la possibilité d'un fonctionnement à pression plus élevée.

Un but de la présente invention est d'offrir la possibilité de doubler la durée de vie des tubes neutroniques sans nuire à la simplicité de réalisation de ces tubes.

Un autre but est de réaliser un tube neutronique multicellulaire qui concilie l'avantage d'une durée de vie plus grande avec un fonctionnement en impulsion amélioré pour les fréquences de fonctionnement les plus élevées.

Ces buts sont atteints et les inconvénients de l'art antérieur sont atténués grâce au fait que le tube neutronique défini en préambule est remarquable en ce que parmi les 2n systèmes d'aimantation permanente, la moitié (n) est magnétisée à une valeur nominale autorisant un fonctionnement correct de la cellule associée et l'autre moitié (n) est magnétisée à une valeur nulle ou faible qui ne permet pas à la cellule associée de fonctionner, de façon à avoir une magnétisation sélective des sources d'ions.

De préférence, chaque système d'aimant permanent s'étend le long de l'axe d'une cellule et comporte deux aimants disposés de part et d'autre de la cavité cathodique, parmi lesquels un aimant annulaire entoure l'orifice d'extraction.

De préférence, la source d'ions, à cavité cathodique unique, comporte une anode commune, cylindrique, comportant 2n trous d'anode, constituant les cellules élémentaires, disposés en substance en regard des orifices d'extraction.

L'idée de base de l'invention consiste à concevoir une source d'ions de type Penning qui, au lieu de comporter une seule cellule élémentaire, en comporte 2n que l'on utilise par moitié. Pour réaliser la commutation entre les sources, on agit sur la magnétisation des aimants permanents destinés à produire le champ d'induction nécessaire à l'amorçage de la décharge, l'alimentation électrique étant commune à l'ensemble des cellules de la source d'ions, ce qui constitue le facteur de simplicité précité.

Une façon pratique de réaliser la commutation consiste à équiper initialement n cellules seulement, parmi les 2n, de systèmes d'aimantation magnétisés dans un sens donné, les n autres systèmes n'étant pas magnétisés, puis en fin de vie du tube, c'est-à-dire lorsque l'usure de la cible est telle que le niveau neutronique est inférieur à la spécification, de magnétiser l'ensemble des systèmes d'aimantation en sens inverse du sens d'origine, de façon à activer les n cellules non encore utilisées tout en neutralisant les n premières et en permettant ainsi un deuxième cycle d'utilisation du tube, de durée sensiblement égale à celle du cycle précédent.

Du point de vue de la durée de vie, on peut alors se poser la question de l'intérêt d'activer successivement n cellules élémentaires fonctionnant au courant nominal plutôt que de faire fonctionner simultanément les 2n cellules à courant moitié, en vue d'obtenir la même durée de vie, avec le même débit de neutrons. En mode de fonctionnement continu, on pourrait considérer que les 2 solutions sont équivalentes si l'on fait abstraction des différences de profil de répartition de la densité de bombardement de la cible, en fonction de la pression.

En revanche, en fonctionnement par impulsions - ce qui reste le domaine privilégié d'utilisation d'un générateur neutronique, par rapport à la source isotopique - il faut tenir compte du retard à l'amorçage de la source d'ions, lequel augmente quand la pression diminue, ce qui a pour conséquence de limiter la fréquence maximum d'utilisation.

Par ailleurs, cette utilisation en deux temps ne doit pas exclure l'utilisation éventuelle du tube avec fonctionnement simultané de toutes les sources élémentaires (2n), ce qui peut être d'intérêt dans les cas suivants, indiqués à titre d'illustration :

- Pour éviter la zone de pression où le fonctionnement est instable. Cette possibilité revient à augmenter la plage d'utilisation du tube.
- Pour doubler le niveau de sortie (sans bénéficier alors de l'augmentation de la durée de vie) dans la mesure où la dissipation thermique est compatible.
- Pour choisir une pression de fonctionnement qui avantage la stabilité de l'émission neutronique (dans la mesure où le couple Taux de travail/Fréquence de fonctionnement peut être satisfait). Cela tient au fait que, en mode de régulation de pression, la stabilité du courant tube $\frac{\Delta I_c}{I_c}$ dépend de la précision de régulation du courant réservoir $\frac{\Delta I_R}{I_R}$ d'une façon variable, en fonction de la pression : $\frac{\Delta I_c}{I_c} = K \frac{\Delta I_R}{I_R}$ avec $13 \leq K \leq 56$ selon la valeur de la pression.

La description qui suit, en regard des dessins annexés, le tout donné à titre d'exemple, fera bien comprendre comment l'invention peut être réalisée.

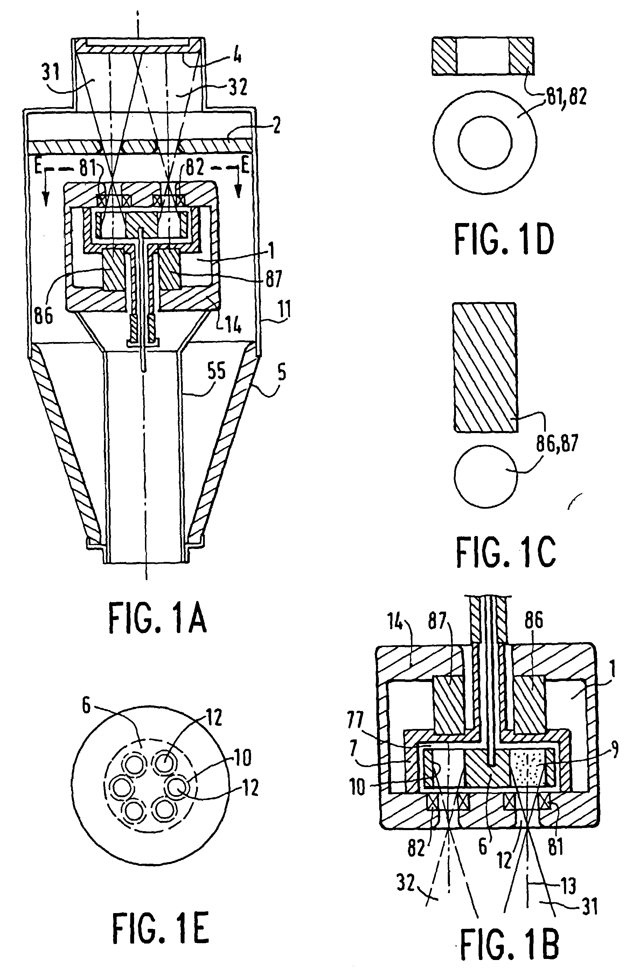

La figure 1 représente :

- en A, en élévation et en coupe, le schéma d'un tube neutronique scellé selon l'invention,

- en B, la source d'ions de la figure 1A, retournée et agrandie,
- en C et en D, les aimants qui constituent le système d'aimantation de chaque cellule élémentaire,
- en E, la vue E-E de la figure 1A.

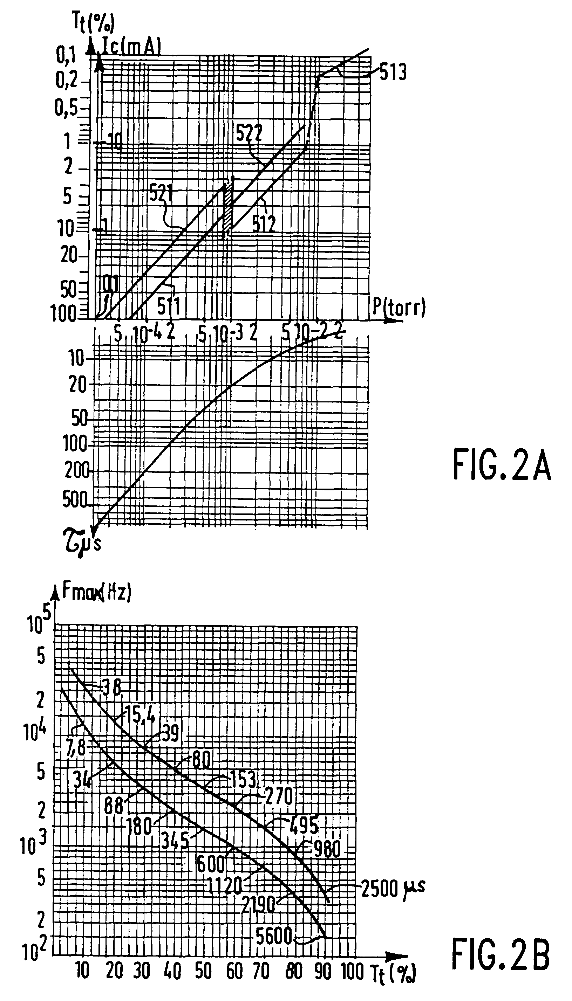

Les figures 2A et 2B sont des graphes qui indiquent le fonctionnement comparé d'un tube de l'art antérieur et d'un tube selon l'invention.

Les schémas de la figure 1 montrent les principaux éléments de base d'un tube neutronique scellé 11 renfermant un mélange gazeux sous faible pression à ioniser tel que deutérium-tritium et qui comporte une source d'ions 1 et une électrode d'extraction-accélération 2 entre lesquelles existe une différence de potentiel très élevée (pouvant dépasser 150 kV) permettant l'extraction et l'accélération des faisceaux d'ions 31, 32 et leur projection sur une électrode cible 4 où s'effectue la réaction de fusion entraînant une émission de neutrons à 14 MeV.

La source d'ions 1 est représentée agrandie et retournée à la figure 1B. Elle est solidaire d'un isolateur 5 qui l'isole électriquement de la partie restante du tube qui lui est complémentaire, et comporte une borne 55 d'alimentation en THT. Cette source d'ions, de préférence de type Penning, est constituée d'au moins une anode cylindrique 6, et d'une structure cathodique 7 qui délimite une cavité cathodique 77 à laquelle est associé un système d'aimantation permanente. Sur la figure, ce système est constitué par des aimants tels que 81 ou 82, et 86 ou 87, représentés agrandis aux figures 1D et 1C, à champ magnétique axial qui confine le gaz ionisé 9 aux alentours de chaque cylindre d'anode. Un canal d'émission des ions, encore nommé orifice d'extraction 12 est pratiqué en vis-à-vis de chaque cylindre d'anode.

La source de Penning de la figure 1 est multicellulaire et, pour une mise en oeuvre plus optimale de l'invention, elle comporte de préférence un nombre pair, soit 2n cellules d'émission élémentaires qui sont toutes contenues dans la cavité cathodique unique 77. Chaque cellule peut comporter une anode qui lui est propre mais, de préférence, l'anode 6 est commune, étant constituée d'un disque métallique de 15 à 20 mm d'épaisseur, percé d'autant de trous 10 qu'il y a de cellules, chaque trou constituant un cylindre d'anode dans lequel oscillent des électrons. La figure 1E, qui représente la structure d'anode vue de dessus, montre aussi, en traits interrompus, l'anode commune 6, percée de 6 alésages 10 régulièrement espacés en cercle avec un pas angulaire de 60°. En regard de chaque alésage 10 se trouve un orifice d'extraction représenté en trait plein, 12. Sur la figure 1B, au-dessus de chaque alésage 10, un aimant permanent 86, respectivement 87, s'étend selon l'axe 13 de chaque cellule, disposé entre la cathode 7 et une culasse commune 14 qui permet au champ magnétique créé axialement dans chaque cellule de se reboucler dans chaque paire d'aimants 87, 82, respectivement 86, 81, qui constitue un système d'aimantation permanente pour chaque cellule. Dans une source de Penning multi-cellulaire d'un type connu, il est possible d'utiliser, comme système d'aimantation permanente, un seul gros aimant permanent disposé dans l'espace qu'occupent les aimants 86 et 87 des figures 1A et 1B. On notera par ailleurs que le sens donné au champ magnétique est sans importance pour un fonctionnement correct du tube puisque la fonction dévolue à ce champ est de conférer aux électrons qui oscillent dans les trous d'anode, des trajectoires en hélices visant à accroître la distance parcourue et augmenter ainsi la probabilité de collision avec un atome ou une molécule d'hydrogène, ce qui provoque l'ionisation. Ces trajectoires peuvent ainsi indifféremment être dextrorsum ou senestrorsum. Pour la mise en oeuvre de l'invention, il est nécessaire que chaque cellule possède son système d'aimantation propre, constitué de préférence par une paire d'aimants, de part et d'autre de l'anode, plutôt qu'un seul aimant de type 86 ou 87, même si la culasse 14 peut, quant à elle, rester commune à tous les aimants. Les aimants 86 et 87 ont de préférence la forme d'un barreau cylindrique (figure 1C) d'environ 30 mm de long et 14 mm de diamètre. Les aimants 81 et 82 ont une forme d'anneau cylindrique d'épaisseur 8 mm et de diamètre extérieur 20 mm environ. Ces aimants sont de préférence à base d'aluminium, nickel et cobalt, tels ceux connus sous le nom commercial d' "Alnico 1500", le champ magnétique à développer devant être de l'ordre de 0,1 T (1000 Gauss). L'alnico présente l'avantage de supporter, sans perte d'induction, des températures élevées (de l'ordre de 400°C). Ceci permet de réduire le temps d'étuvage pour dégazage avant scellement dans le tube de la source d'ions munie de ses aimants. D'autres types d'aimants, tels les aimants au Samarium, sont plus puissants mais, dans l'état actuel de la technologie, ils perdent leur aimantation au-dessus d'une certaine température (200°C pour les aimants au Samarium). Des aimants au Samarium seraient cependant utilisables, pour la mise en oeuvre de l'invention, moyennant de diminuer la température d'étuvage tout en en augmentant la durée.

Habituellement, pour un tube à neutrons du type de la figure 1, les aimants sont mis en place, à l'état neutre, dans la culasse 14, avec les autres éléments 7, 6, déjà décrits, et ce sous-ensemble est à son tour agencé dans le tube 11, à l'intérieur duquel est instauré un vide partiel (après dégazage) et qui est ensuite scellé. C'est seulement à ce stade qu'est opérée la magnétisation des aimants, dans l'art connu, le tube étant placé sur un banc de magnétisation. Cette magnétisation s'effectue en une fois, et à saturation, au moyen d'une bobine d'induction disposée autour du tube, parcourue par une impulsion de courant de magnétisation suffisamment longue.

Selon l'invention, au contraire, l'aimantation s'effectue en premier, et une discrimination est opérée, une moitié n seulement des aimants étant préalablement aimantée (à saturation), alors que l'autre moitié est laissée à l'état neutre, avant montage dans la culasse 14. Le montage du tube est ensuite poursuivi comme indiqué ci-dessus, mais il n'y a pas d'autre phase d'aimantation avant la mise en service du tube. On notera cependant que, dans le tube selon l'invention ainsi élaboré, la magnétisation des aimants désormais incorporés dans le tube, demeure possible, dans un sens ou dans l'autre, par magnétisation du tube placé sur un banc de magnétisation ad hoc. Sur la figure 1, les aimants préalablement aimantés (activés) sont référencés 81, 86, alors que les aimants tels que 82, 87, sont laissés à l'état neutre. De préférence, le motif des systèmes d'aimantation activés (de type 81 et 86) est régulier, au sein de la source d'ions 1, étant complémentaire et exactement imbriqué avec le motif des systèmes d'aimants non activés (de type 82 et 87). Par exemple, comme représenté à la figure 1, 6 systèmes d'aimantation sont distribués selon les génératrices d'un cylindre avec un pas angulaire de 60°, de façon qu'un système d'aimantation activé alterne avec un système d'aimantation non activé. Les systèmes d'aimantation sont montés dans le tube avec un sens d'aimantation donné, le même pour tous.

Lors de la mise en service de ce tube selon l'invention, seules peuvent fonctionner les sources d'ions où règne un champ magnétique assez élevé, engendré par les aimants 86, 81. Dans les autres sources, le trajet des électrons est insuffisant pour amorcer la production de paires ion-électron, ces derniers électrons pouvant à leur tour produire d' autres paires ion-électron. En effet, en l'absence de champ magnétique, les électrons sont captés par l'anode sans osciller. Leur parcours est trop court pour avoir une probabilité significative de réaliser une ionisation.

On obtient ainsi un tube équivalent à un tube multi-cellulaire à n sources d'ions. Au bout d'un temps de fonctionnement égal à T (quelques centaines à quelques milliers d'heures selon le niveau de sortie demandé) le tube arrive en fin de vie, par le fait que, à l'endroit des centres d'impact des faisceaux d'ions sur la cible où le bombardement ionique est le plus fort, la cible est usée au point que le niveau de sortie pour lequel elle était réglée a considérablement chuté. Selon l'invention, le tube à n sources est remis à un nouvel état initial de fonctionnement par une réaimantation judicieusement effectuée qui désactive les n sources d'ions précédemment actives et qui active les n autres sources d'ions. Pour cela, le tube doit être placé sur le banc d'aimantation et recevoir une impulsion d'aimantation, en sens inverse dudit sens donné aux n sources précédemment activées, avec une intensité apte à annuler, au premier ordre, l'aimantation de ces dernières. Dans le même temps, les n sources qui étaient jusqu'alors à l'état magnétique neutre, acquièrent une aimantation de sens inverse dudit sens donné. On notera que, lors de cette phase de magnétisation (finale), les n systèmes d'aimantation activés ne devraient pas être magnétisés à saturation, au risque d'obtenir un tube avec les 2n systèmes d'aimantation activés selon le même (nouveau) sens de magnétisation. Toutefois, si on exclut le risque de perforation du substrat de la cible, il est possible dans ce dernier cas de retrouver néanmoins le niveau de sortie neutronique nominal, au prix d'un courant double, dans la mesure où le générateur est capable du courant demandé et où le tube peut accepter une dissipation thermique double. Ainsi le tube à n sources selon l'invention peut être utilisé pendant une durée encore égale à T environ.

On obtient ainsi, toutes choses égales par ailleurs, et notamment la pression interne, un tube multi-cellulaire (à n sources) dont la durée de vie est double de celle d'un tube multi-cellulaire (à n sources de l'art connu). A noter aussi que la magnétisation du tube effectuée à mi-vie requiert une assez grande précision pour ce qui est du nouvel état d'aimantation recherché pour tous les aimants. Dans cette optique, il est favorable, pour éviter des dispersions d'aimantations, d'utiliser des aimants qui ont entre eux des carctéristiques aussi proches que possible et, de préférence, des aimants du même lot.

Il est indiqué ci-dessus que, lors de la magnétisation dite finale du tube, les n systèmes d'aimantation activés ne devraient pas être magnétisés à saturation. Pour compenser ce léger inconvénient, qui résulterait en n nouvelles sources d'ions à débit inférieur à celui des n sources primitivement actives, on peut prévoir, en variante, de surdimensionner, à proportion de cette non-saturation magnétique, les aimants du type 82, 87.

Par ailleurs, il faut considérer que la quantité de neutrons pouvant être émise par un tube est directement liée à la quantité de (par exemple) tritium que peut emmagasiner la cible dans sa (ou ses) couche(s) active(s). Cette considération peut conduire à comparer le tube selon l'invention à un tube de l'art antérieur à 2n sources d'ions (c'est-à-dire le tube selon l'invention mais pour lequel on magnétiserait toutes les sources en même temps, avant la première mise en fonctionnement) dont chaque source fonctionnerait à courant (ionique) de cible moitié par rapport aux sources décrites ci-dessus (soit $I_c/2n$ au lieu de $I_c/n$), mais pendant un temps double, c'est-à-dire 2T. Par rapport au tube de l'invention, on obtient, au premier ordre, le même courant cible total, $I_c$, et partant, le même débit de neutrons, et la même durée de vie, égale à 2T dans l'un et l'autre cas. Cette comparaison montre que les avantages de l'invention ne sont que partiellement liés au débit neutronique du tube ou à sa durée de vie, et donc peu liés au nombre total de neutrons que le tube est à même d'émettre pendant sa durée de vie. Par contre, un avantage net apparaît, lié au fait que le tube selon l'invention fonctionne à une pression en substance double de celle du tube multi-cellulaire à 2n sources d'ions de l'art connu, cet avantage étant réservé au fonctionnement pulsé (ou en impulsions).

En fonctionnement pulsé, il se produit un retard à l'amorçage, $\tau$, à chaque impulsion. Ce retard, qui augmente lorsque la pression dans le tube diminue, est en outre d'autant plus gênant qu'il fluctue, d'une impulsion à la suivante (phénomène de vacillement). Pour un courant cible $I_c$ et un taux de travail réel $T_t$ (exprimé en %) donnés, il y a donc une limite supérieure à la fréquence maximale de fonctionnement du tube qu'il est possible d'atteindre. L'avantage d'une pression accrue en fonctionnement pulsé, pour réduire la durée $\tau$, apparaît surtout pour les tubes à neutrons du type deutérium-deutérium, (D-D) pour lesquels l'amorçage est plus délicat car les "germes" électroniques qui favorisent cet amorçage y sont plus rares que dans le tube deutérium-tritium (D-T) où une pression partielle de tritium existe dans l'enceinte du tube, et il s'ensuit des retards $\tau$ et des fluctuations de ces retards beaucoup plus importants que pour le tube D-T (à pression égale dans l'un et l'autre tube).

La figure 2A est un double graphe qui indique, en coordonnées logarithmiques, et pour un tube deutérium-tritium, les relations qui existent entre les principaux paramètres (précités) caractérisant le tube en fonctionnement pulsé. Sur le graphe supérieur, la courbe à 3 segments représentative du tube selon l'invention est référencée 511, 512, 513, alors que la courbe (à 2 segments) pour le tube équivalent selon l'art connu (2n sources d'ions) est référencée 521, 522. En se limitant au premier segment de chaque courbe, 511, respectivement 521, on peut déduire de la figure 2A le graphe de la figure 2B sur lequel la courbe des fréquences maximales $F_{max}$ relative à l'invention est référencée 515 et celle relative à l'art connu, 525 ($F_{max} = \frac{1 \cdot T_t}{\tau}$). Chaque courbe, paramétrée en valeurs de durée d'impulsion neutronique, $t_i$ en $\mu s$, limite vers le haut le domaine de fréquence de fonctionnement qu'il est matériellement possible d'obtenir avec l'un ou l'autre tube. On observe que les fréquences maximales de fonctionnement $F_{max}$, qui fournissent les points des courbes 515 et 525, sont plus que doublées, pour l'invention, par rapport à l'art connu.

L'invention s'applique à des tubes neutroniques du type D-D ou du type D-T. L'invention est compatible avec d'autres perfectionnements visant à augmenter la durée de vie de la cible et, par voie de conséquence, du tube. On peut citer notamment le tube ayant une cible à plusieurs couches actives décrit dans le brevet européen EP-A-0 338 619 au nom de la demanderesse, déjà indiqué plus haut.

Pour améliorer la durée de vie d'un tube neutronique multi-cellulaire du type décrit ci-dessus au premier paragraphe, on peut aussi penser utiliser plusieurs sources d'ions élémentaires électriquement alimentées individuellement chacune à tour de rôle. Il serait donc équivalent, quant au résultat recherché, d'opérer une discrimination sur l'alimentation électrique pour la polarisation d'anode des cellules. Cependant, la réalisation d'un tel tube, si toutefois elle peut être envisagée, conduirait à une réalisation beaucoup plus complexe que pour la discrimination entre champs magnétiques, étant donnés les problèmes de réalisation du coeur des cellules élémentaires, avec les problèmes d'isolation électrique y attachés.

**Revendications**

1. Tube neutronique scellé contenant un mélange gazeux deutérium-tritium ou deutérium-deutérium sous faible pression et comportant une source d'ions, une électrode d'extraction-accélération et une électrode cible, la source d'ions étant constituée de 2n cellules d'émission élémentaires de type Penning, ces cellules ayant des anodes disposées dans une cavité cathodique unique munie d'un orifice d'extraction par cellule selon l'axe de cette dernière, et chaque cellule comportant un système d'aimantation permanente, les ions, formés par bombardement d'électrons sur ledit mélange gazeux, dans la source d'ions, étant canalisés par un champ magnétique de confinement créé par lesdits systèmes d'aimantation extraits à travers les orifices d'extraction percés dans la cathode et accélérés par ladite électrode d'extraction-accélération, et projetés sur ladite électrode cible pour y produire une réaction de fusion entraînant une émission de neutrons, caractérisé en ce que parmi les 2n systèmes d'aimantation permanente la moitié (n) est magnétisée à une valeur nominale autorisant un fonctionnement correct des cellules associées et l'autre moitié (n) est magnétisée à une valeur nulle ou faible qui ne permet pas aux cellules associées de fonctionner, de façon à avoir une magnétisation sélective de source d'ions.

2. Tube neutronique selon la revendication 1, caractérisé en ce que chaque système d'aimantation permanente s'étend le long de l'axe d'une cellule et comporte deux aimants disposés de part et d'autre de la cavité cathodique, parmi lesquels un aimant annulaire entoure l'orifice d'extraction.

3. Tube neutronique selon la revendication 1 ou 2, dans lequel ladite source d'ions, à cavité cathodique unique, comporte une anode commune, cylindrique, comportant 2n trous d'anode, constituant les cellules élémentaires, disposés en substance en regard des orifices d'extraction.

4. Procédé de fabrication d'un tube neutronique scellé selon l'une des revendications 1 à 3, contenant un mélange gazeux deutérium-tritium sous faible pression et comportant une source d'ions, une électrode d'extraction-accélération et une électrode cible, la source d'ions étant constituée de 2n cellules élémentaires de type Penning, l'ensemble des 2n cellules comportant une anode commune dans une cavité cathodique unique munie d'un orifice d'extraction par cellule selon l'axe de cette dernière, et un système d'aimantation permanente, caractérisé en ce que la première étape consiste à monter n cellules élémentaires de la source d'ions avec des systèmes d'aimantation déjà magnétisés selon une induction initiale qui a un sens donné, les n autres systèmes d'aimantation étant montés non magnétisés sur les n autres cellules.

5. Procédé de fabrication d'un tube neutronique selon la revendication 4, caractérisé en ce qu'après l'atteinte de la fin de vie de la fraction de cible bombardée par les n cellules magnétisées dans ledit sens donné, une deuxième étape de magnétisation de valeur prédéterminée dans un sens inverse dudit sens donné, de l'ensemble de la source d'ions, provoque de façon concomitante la mise hors service des n cellules précédemment actives et la mise en service des n autres cellules.

**Patentansprüche**

1. Eingekapselte Neutronenröhre, die ein Deuterium-Tritium oder Deuterium-Deuterium-Gasgemisch unter geringem Druck enthält und eine Ionenquelle, eine Extraktionsbeschleunigungselektrode und eine Target-Elektrode umfaßt, wobei die Ionenquelle aus 2n Elementaremissionszellen des Penning-Typs besteht und diese Zellen Anoden haben, die in einem einzigen Kathodenhohlraum angebracht sind, der mit einer Extraktionsöffnung pro Zelle entlang-der Achse der letzteren ausgestattet ist, und jede Zelle ein Permanentmagnetisierungssystem umfaßt, wobei die durch Elektronenbeschuß auf dem genannten Gasgemisch gebildeten Ionen in der Ionenquelle durch ein magnetisches Einschlußfeld, das von den genannten Magnetisierungssystemen gebildet wird, kanalisiert werden, durch die in die Kathoden gebohrten Extraktionsöffnungen extrahiert und durch die genannte Target-Elektrode beschleunigt werden, um dort eine Fusionsreaktion hervorzurufen, die zu einer Neutronenemission führt, dadurch gekennzeichnet, daß von den 2n Permanentmagnetisierungssystemen die Hälfte (n) mit einem Nennwert magnetisiert wird, der einen einwandfreien Betrieb der zugehörigen Zelle gewährleistet, und daß die andere Hälfte (n) mit einem geringen oder einem Wert Null magnetisiert wird, so daß eine selektive Magnetisierung der Ionenquellen erhalten wird.

2. Neutronenröhre nach Anspruch 1, dadurch gekennzeichnet, daß jedes Permanentmagnetisierungssystem sich entlang der Achse einer Zelle befindet und zwei Magneten umfaßt, die auf beiden Seiten des Kathodenhohlraums angebracht sind und von denen einer ein ringförmiger Magnet ist, der die Extraktionsöffnung umgibt.

3. Neutronenröhre nach Anspruch 1 oder 2, in der die genannte Ionenquelle mit einem einzigen Kathodenhohlraum eine gemeinsame zylindrische Anode umfaßt, die 2n Anodenlöcher hat, die die Elementarzellen bilden und im wesentlichen gegenüber den Extraktionsöffnungen angebracht sind.

4. Herstellungsverfahren für eine eingekapselte Neutronenröhre nach einem der Ansprüche 1 bis 3, die ein Deuterium-Tritium-Gasgemisch unter geringem Druck enthält und eine Ionenquelle, eine Extraktionsbeschleunigungselektrode und eine Target-Elektrode umfaßt, wobei die Ionenquelle aus 2n Elementaremissionszellen des Penning-Typs besteht und die Gesamtheit der 2n Zellen eine gemeinsame Anode in einem einzigen Kathodenhohlraum haben, der mit einer Extraktionsöffnung pro Zelle entlang der Achse der letzteren ausgestattet ist, und ein Permanentmagnetisierungssystem, dadurch gekennzeichnet, daß der erste Schritt darin besteht, n Elementarzellen der Ionenquelle mit den Magnetisierungssystemen zu montieren, die bereits mittels einer Anfangsinduktion mit einer gegebenen Richtung magnetisiert wurden, wobei die n anderen Magnetisierungssysteme unmagnetisiert auf die n anderen Zellen montiert werden.

5. Herstellungsverfahren für eine Neutronenröhre nach Anspruch 4, dadurch gekennzeichnet, daß nach Erreichen des Endes der Lebensdauer des Target-Bereichs, der von den n in der genannten gegebenen Richtung magnetisierten Zellen beschossen wird, ein zweiter Schritt zur Magnetisierung der gesamten Ionenquelle mit einem vorbestimmten Wert in einer umgekehrten wie der genannten gegebenen Richtung dazu führt, daß gleichzeitig die n zuvor aktiven Zellen außer Betrieb genommen und die n anderen Zellen in Betrieb genommen werden.

**Claims**

1. a Sealed neutron tube containing a deuterium-tritium or deuterium-deuterium gas mixture under low pressure and including an ion source, an extraction-acceleration electrode and a target electrode, the ion source consisting of 2n elementary emission cells of the Penning type, which cells have anodes arranged in a single cathode cavity provided with one extraction orifice per cell along the axis thereof, and each cell include a permanent magnetization system, the ions formed by electron bombardment on said gas mixture in the ion source being channelled by a confinement magnetic field created by said magnetization systems, extracted through the extraction orifices pierced in the cathode and accelerated by said extraction-acceleration electrode, and projected onto said target electrode in order to produce therein a fusion reaction leading to an emission of neutrons, characterized in that one half (n) of the 2n permanent magnetization systems is magnetized to a nominal value, allowing correct operation of the associated cells, and the other half (n) is magnetized to a zero or low value which does not allow the associated cells to operate, so that selective ion source magnetization is obtained.

2. A neutron tube as claimed in Claim 1, characterized in that each permanent magnetization system extends along the axis of a cell and includes two magnets arranged on either side of the cathode cavity, among which an annular magnet surrounds the extraction orifice.

3. A neutron tube as claimed in Claim 1 or 2, in which said ion source, with a single cathode cavity, includes a common cylindrical anode with 2n anode holes which constitute the elementary cells and are situated substantially opposite the extraction orifices.

4. A method of manufacturing a sealed neutron tube as claimed in any one of the Claims 1 to 3, containing a deuterium-tritium gas mixture under low pressure and including an ion source, an extraction-acceleration electrode and a target electrode, the ion source consisting of 2n elementary cells of the Penning type, all the 2n cells including a common anode in a single cathode cavity provided with one extraction orifice per cell along the axis thereof, and a permanent magnetization system, characterized in that the first step consists in mounting n elementary cells of the ion source with magnetization systems already magnetized with an initial induction of a given direction, the other n magnetization systems being mounted in the non-magnetized state on the other n cells.

5. A method of manufacturing a neutron tube as claimed in Claim 4, characterized in that when the end of the lifetime of the target section bombarded by the n cells magnetized in said given direction is reached, a second step of magnetization of all the ion source by a predetermined value in a direction opposite to said given direction concomitantly deactivates the n cells previously active and activates the n other cells.

FIG. 1A

FIG. 1D

FIG. 1C

FIG. 1E

FIG. 1B

FIG.2A

FIG.2B